# EUROPÄISCHE PATENTSCHRIFT

(11) **EP 1 969 280 B1**
(45) Veröffentlichungstag und Bekanntmachung des Hinweises auf die Patenterteilung: **15.07.2009**
(21) Anmeldenummer: 06818651.9
(22) Anmeldetag: 18.11.2006
(51) Int. Cl.: F16L 37/14

(54) **STECKTEIL FÜR STECKVERBINDERANORDNUNG**
PLUG-IN PART FOR A PLUG CONNECTOR ARRANGEMENT
FICHE POUR SYSTEME DE CONNECTEUR ENFICHABLE

(30) Priorität: 05.01.2006 DE 102006002564
(43) Veröffentlichungstag der Anmeldung: 17.09.2008
(73) Patentinhaber: Alfred Kärcher GmbH & Co. KG, 71364 Winnenden (DE)
(72) Erfinder: BINDER, Jürgen, 71397 Leutenbach (DE); SCHMID, Jörg, 71579 Spiegelberg (DE)
(74) Vertreter: Karrais, Martin
(86) Internationale Anmeldenummer: PCT/EP2006/011083
(87) Internationale Veröffentlichungsnummer: WO 2007/076905

(56) Entgegenhaltungen:
- DE-U1- 8 624 767
- US-A1- 3 698 747

## Beschreibung

Die Erfindung betrifft ein Steckteil für eine Steckverbinderanordnung, wobei das Steckteil nach Art eines Rohrstückes ausgebildet ist und einen Dichtungsabschnitt mit einem das Rohrstück in Umfangsrichtung umgebenden Dichtungselement sowie einen Verriegelungsabschnitt mit mindestens einer Hinterschneidung aufweist, und wobei das Steckteil zur Herstellung einer fluiddichten Verbindung in die Aufnahme eines Kupplungsteiles der Steckverbinderanordnung einsteckbar und im Bereich der Hinterschneidung von mindestens einem Verriegelungselement des Kupplungsteiles hintergreifbar ist.

Derartige Steckteile kommen bei Steckverbinderanordnungen zum Einsatz, mit deren Hilfe Rohr- oder Schlauchleitungen lösbar miteinander verbindbar sind. Die Steckverbinderanordnung weist hierzu ein Kupplungsteil auf mit einer Aufnahme, in die das Steckteil eingesteckt werden kann. Mit Hilfe von Verriegelungselementen kann das Steckteil im Kupplungsteil verriegelt werden. Das Steckteil ist in Form eines Rohrstückes ausgebildet und weist seinem freien Ende benachbart einen Dichtungsabschnitt auf mit einem das Rohrstück in Umfangsrichtung vollständig umgebenden Dichtungselement. Ist das Steckteil in die Aufnahme des Kupplungsteiles eingesteckt, so liegt das Dichtungselement fluiddicht an der Wand der Aufnahme an und mindestens eine Hinterschneidung, die im Bereich eines Verriegelungsabschnittes des Steckteiles positioniert ist, wird von einem Verriegelungselement des Kupplungsteiles hintergriffen. Das Steckteil ist somit unter Aufrechterhaltung einer fluiddichten Verbindung in Richtung seiner Längsachse in der Aufnahme des Kupplungsteiles festgelegt.

Derartige Steckteile sind beispielsweise aus der Gebrauchsmusterschrift DE 86 24 767 U1 bekannt. Zum Verriegeln des Steckteils in der Aufnahme des Kupplungsteiles wird in dieser Gebrauchsmusterschrift der Einsatz eines Verriegelungssteckers mit zwei Schenkeln und einem diese miteinander verbindenden Steg vorgeschlagen, wobei die Schenkel jeweils ein Verriegelungselement ausbilden. Das Steckteil ist in Form eines Rohrstückes ausgebildet und weist einen kegeligen Abschnitt auf, an den sich eine Ringnut anschließt, die auf ihrer dem kegeligen Abschnitt abgewandten Seite von einem zylindrischen Abschnitt begrenzt ist. Sowohl der zylindrische Abschnitt als auch der kegelige Abschnitt umgeben das bekannte Rohrstück vollständig in Umfangsrichtung. Die der Frontseite des bekannten Steckteils abgewandte Rückseite des kegeligen Abschnittes bildet eine Hinterschneidung aus, die von zwei Verriegelungselementen hintergriffen wird, wenn das Steckteil in die Aufnahme des Kupplungsteiles eingesetzt ist.

Die fluiddichte Verbindung des Steckteiles mit dem Kupplungsteil wird durch ein Dichtungselement sichergestellt. Eine Beeinträchtigung des Dichtungselementes hat zur Folge, dass ein Fluid, das durch das Steckteil und das Kupplungsteil hindurch geführt wird, über den Verriegelungsabschnitt aus der Aufnahme des Kupplungsteiles heraustreten kann.

Aufgabe der vorliegenden Erfindung ist es, ein Steckteil der eingangs genannten Art derart weiterzubilden, dass die Gefahr einer Beeinträchtigung des Dichtungselementes vermindert wird.

Diese Aufgabe wird bei einem Steckteil der gattungsgemäßen Art erfindungsgemäß dadurch gelöst, dass die Hinterschneidung von einem außenseitig vom Rohrstück abstehenden Vorsprung gebildet ist, der sich in Umfangsrichtung lediglich über einen Teilbereich des Rohrstücks erstreckt.

Aufgrund der sich in Umfangsrichtung nur über einen Teilbereich erstreckenden Hinterschneidung weist das Steckteil im Bereich des Verriegelungsabschnittes einen asymmetrischen Querschnitt auf bezogen auf die Längsachse des Steckteiles. Dadurch kann das Steckteil auf konstruktiv einfache Weise unverdrehbar in der Aufnahme des Kupplungsteiles festgelegt werden. Aufgrund der somit ermöglichten unverdrehbaren Halterung des Steckteils in der Aufnahme des Kupplungsabschnittes kann eine mechanische Belastung des Dichtungselementes durch Verdrehen des Steckteiles vermieden werden. Das im Bereich des Verriegelungsabschnittes bezüglich einer Rotation um seine Längsachse asymmetrisch ausgebildete Steckteil zeichnet sich somit durch eine lange Lebensdauer aus.

Das erfindungsgemäße Steckteil hat außerdem den Vorteil, dass zu seiner Fertigung weniger Material als bei herkömmlichen Steckteilen notwendig ist, denn der zur Ausbildung der Hinterschneidung erforderliche Vorsprung erstreckt sich in Umfangsrichtung lediglich über einen Teilbereich des Rohrstückes. Bei der Herstellung des Steckteils kann somit Material eingespart werden, so dass es besonders kostengünstig herstellbar ist.

Von besonderem Vorteil ist es, wenn sich in Umfangsrichtung an den mindestens einen Vorsprung ein abgeflachter Umfangsabschnitt des Rohrstückes anschließt. Der abgeflachte Umfangsabschnitt ermöglicht eine flächige Anlage des Steckteils im Bereich des Verriegelungsabschnittes an einer Wand der Aufnahme des Kupplungsteiles. Dadurch kann die mechanische Belastbarkeit des in die Aufnahme des Kupplungsteiles eingesteckten Steckteiles erhöht werden. Darüber hinaus ermöglicht die Bereitstellung zumindest eines abgeflachten Umfangsabschnittes eine besonders materialoptimierte Herstellung des Steckteiles. Hinzu kommt, dass die Bereitstellung von mindestens einem abgeflachten Umfangsabschnitt einem Benutzer die Handhabung des Steckteiles bei der Herstellung einer fluiddichten Verbindung mit einem korrespondierenden Kupplungsteil vereinfacht, da der Benutzer anhand des abgeflachten Umfangsabschnittes intuitiv die zum Einführen des Steckteiles in die Aufnahme erforderliche Ausrichtung des Steckteiles erkennen kann.

Bei einer bevorzugten Ausführungsform weist der Verriegelungsabschnitt zwei einander diametral gegenüberliegende Vorsprünge auf, die über abgeflachte Umfangsabschnitte miteinander verbunden sind. Die Vorsprünge bilden jeweils eine Hinterschneidung aus, so dass das in die Aufnahme des Kupplungsteiles eingesteckte Steckteil an einander diametral gegenüberliegenden Seiten von Verriegelungselementen hintergriffen werden kann. Zwischen den Vorsprüngen verläuft jeweils ein abgeflachter Umfangsabschnitt, der eine flächige Anlage des Steckteiles in der Aufnahme des Kupplungsteiles ermöglicht. Vorzugsweise sind die abgeflachten Umfangsabschnitte parallel zueinander ausgerichtet.

Günstig ist es, wenn der mindestens eine Vorsprung nach Art eines Wulstes ausgestaltet ist. Alternativ kann vorgesehen sein, dass der Vorsprung stift- oder flügelartig ausgestaltet ist und vorzugsweise in radialer Richtung vom Rohrstück nach außen absteht.

Das erfindungsgemäße Steckteil kommt bevorzugt bei einer Steckverbinderanordnung zum Einsatz, die ein Kupplungsteil mit federelastisch in eine Verriegelungsstellung vorgespannten Verriegelungselementen aufweist. Hierbei ist es von Vorteil, wenn der mindestens eine Vorsprung des Steckteiles der Frontseite des Rohrstückes zugewandt eine kegelige Stirnfläche aufweist. Eine derartige Ausgestaltung hat den Vorteil, dass beim Einsetzen des Steckteiles in die korrespondierende Aufnahme des Kupplungsteiles mit Hilfe des Vorsprunges ein in die Verriegelungsstellung vorgespanntes Verriegelungselement zur Seite gedrückt werden kann, ohne dass hierzu ein zusätzliches Betätigungselement vom Benutzer betätigt werden muss.

Um den Bereich einer flächigen Anlage des Steckteiles in der Aufnahme des korrespondierenden Kupplungsteiles zu vergrößern, ist es günstig, wenn der Vorsprung einen kreisbogenförmigen Außenrand aufweist, der von einer Zylindermantelfläche gebildet wird. Dies stellt sicher, dass der Vorsprung auch an seiner Außenseite flächig an eine Wand der Aufnahme angelegt werden kann. Eine lediglich linienförmige Anlage des Vorsprunges an der Wand der Aufnahme wird dadurch vermieden.

Die sich in Umfangsrichtung lediglich über einen Teilbereich des Rohrstückes erstreckende Hinterschneidung wird bevorzugt von einer radial ausgerichteten Rückseite des Vorsprunges gebildet. Dies ermöglicht eine besonders zuverlässige axiale Festlegung des Steckteils in der Aufnahme des Kupplungsteiles.

Der Abstand der Hinterschneidung von der Frontseite des Steckteiles ist vorzugsweise kleiner als das 2-fache, insbesondere kleiner als das 1,5-fache des Außendurchmessers des Dichtungsabschnittes. Dadurch kann zum einen eine kompakte Bauform des Steckteiles und des korrespondierenden Kupplungsteiles sichergestellt werden, zum anderen ist eine dichte Anlage des Dichtungselementes an der Wand der Aufnahme und gleichzeitig eine zuverlässige Verriegelung des Steckteils in der Aufnahme sichergestellt.

Die Erfindung betrifft nicht nur ein Steckteil der voranstehend erläuterten Art sondern auch eine Steckverbinderanordnung mit einem derartigen Steckteil und mit einem Kupplungsteil, das eine Aufnahme zum Einstecken des Steckteils aufweist sowie eine Verriegelungseinrichtung mit mindestens einem Verriegelungselement, das in einer Verriegelungsstellung seitlich in einen Verriegelungsbereich der Aufnahme eintaucht und mittels eines Betätigungselementes des Kupplungsteiles in eine Freigabestellung bewegbar ist, wobei der Verriegelungsbereich einen Querschnitt aufweist, der dem Querschnitt des Verriegelungsabschnitts des Steckteils im Bereich des mindestens einen Vorsprungs entspricht.

Bei einer derartigen Ausgestaltung ist der Verriegelungsbereich der Aufnahme ebenso wie der Verriegelungsabschnitt des Steckteiles bezüglich einer Rotation um die Längsachse des Steckteils asymmetrisch ausgestaltet, so dass das Steckteil, das an der Wand des Verriegelungsbereiches flächig anliegt, drehfest in der Aufnahme gehalten ist.

Die Aufnahme kann beispielsweise zwei einander gegenüberliegende flache Wandabschnitte umfassen, die über zwei kreisbogenförmige Wandabschnitte miteinander verbunden sind. Die kreisbogenförmigen Wandabschnitte können eine Durchbrechung aufweisen, über die jeweils ein Verriegelungselement in die Aufnahme seitlich eintauchen kann, und die flachen Wandabschnitte dienen der flächigen Anlage der korrespondierenden abgeflachten Umfangsabschnitte des Steckteils.

Die nachfolgende Beschreibung einer bevorzugten Ausführungsform der Erfindung dient im Zusammenhang mit der Zeichnung der näheren Erläuterung. Es zeigen:
- Figur 1:: eine perspektivische Darstellung nach Art einer Explosionszeichnung eines Kupplungsteiles einer Steckverbinderanordnung;

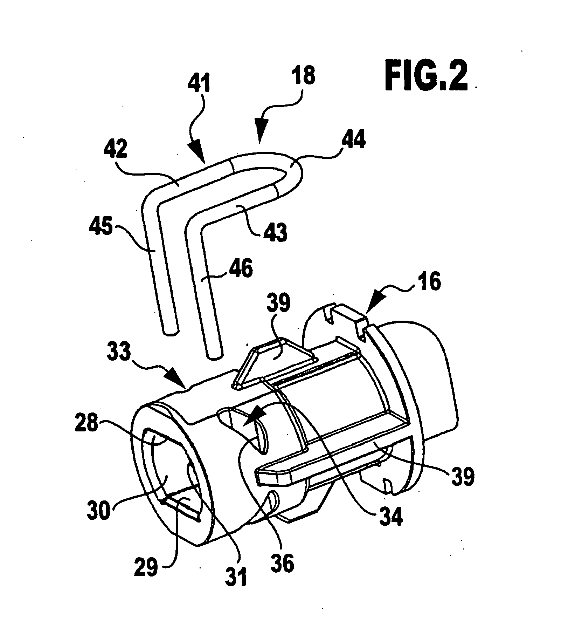

- Figur 2:: eine perspektivische Darstellung nach Art einer Explosionszeichnung eines Kupplungskörpers und einer Verriegelungseinrichtung des Kupplungsteiles aus Figur 1;
- Figur 3:: eine Steckverbinderanordnung mit einem Kupplungsteil gemäß Figur 1 und einem erfindungsgemäßen Steckteil;
- Figur 4:: eine perspektivische Darstellung des Steckteiles aus Figur 3 schräg von hinten;
- Figur 5:: eine perspektivische Darstellung des Steckteiles aus Figur 3 schräg von vorne;
- Figur 6:: eine Schnittansicht längs der Linie 6-6 in Figur 3 vor dem Einsetzen des Steckteiles in das Kupplungsteil;
- Figur 7:: eine Schnittansicht längs der Linie 7-7 in Figur 3 vor dem Einsetzen des Steckteiles in das Kupplungsteil;
- Figur 8:: eine Schnittansicht entsprechend Figur 6 nach dem Einsetzen des Steckteiles in das Kupplungsteil;
- Figur 9:: eine Schnittansicht entsprechend Figur 7 nach dem Einsetzen des Steckteiles in das Kupplungsteil;
- Figur 10:: eine Schnittansicht entsprechend Figur 7 beim Lösen des Steckteiles aus dem Kupplungsteil und
- Figur 11:: eine teilweise aufgetrennte Draufsicht auf das Kupplungsteil beim Lösen des Steckteiles.

In der Zeichnung ist eine insgesamt mit dem Bezugszeichen 10 belegte Steckverbinderanordnung schematisch dargestellt mit einem Kupplungsteil 11 und einem Steckteil 12, das zum Herstellen einer fluiddichten Verbindung in eine Aufnahme 14 des Kupplungsteiles eingesetzt werden kann.

Das Kupplungsteil 11 ist dreiteilig ausgebildet und umfasst einen Kupplungskörper 16, der im Wesentlichen zylinderförmig ausgebildet ist und die Aufnahme 14 aufweist, sowie eine Verriegelungseinrichtung 18 und eine Betätigungshülse 20.

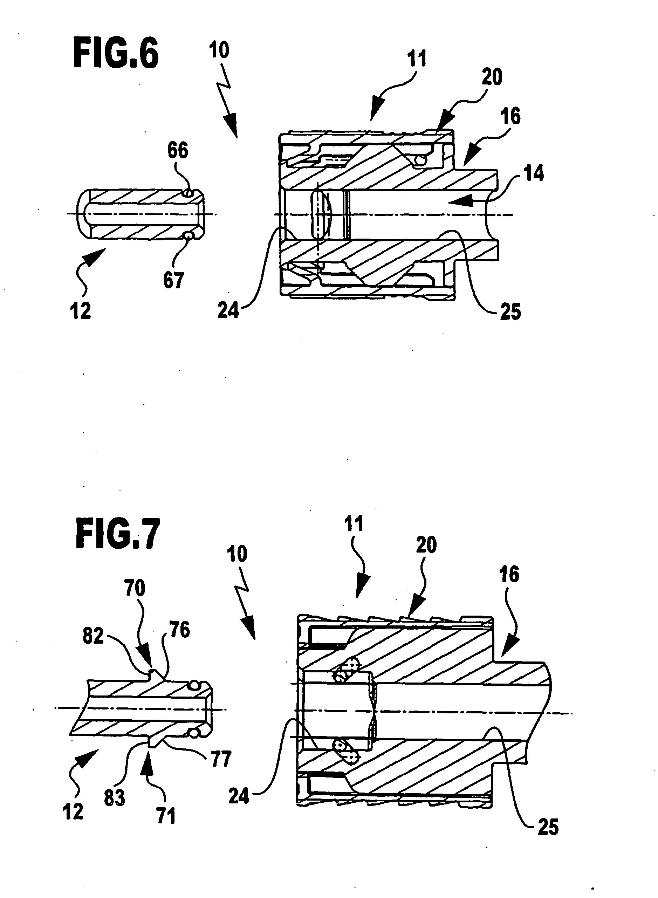

Wie insbesondere aus Figuren 6 bis 9 deutlich wird, ist die Aufnahme 14 als den Kupplungskörper 16 durchgreifende Durchgangsbohrung ausgestaltet, die einen in die Frontseite 23 des Kupplungskörpers 16 einmündenden Verriegelungsbereich 24 und einen sich daran anschließenden Dichtungsbereich 25 ausbildet. Der Dichtungsbereich 25 ist zylindersymmetrisch ausgebildet, wohingegen der Verriegelungsbereich 24 zwei einander diametral gegenüberliegende flache Wandabschnitte 28, 29 aufweist, die über kreisbogenförmige Wandabschnitte 30, 31 miteinander verbunden sind. Die flachen Wandabschnitte 28, 29 sind parallel zueinander ausgerichtet.

In Höhe des Verriegelungsbereiches 14 weist der Kupplungskörper 16 zwei in den Verriegelungsbereich 24 seitlich einmündende und den Kupplungskörper 16 durchgreifende Längsbohrungen 33, 34 auf mit schräg zur Längsachse des Kupplungskörpers ausgerichteten Gleitflächen 35, 36.

Von der Außenseite 38 des Kupplungskörpers 16 stehen in Umfangsrichtung in gleichmäßigem Abstand zueinander mehrere Führungsrippen 39 radial nach außen ab.

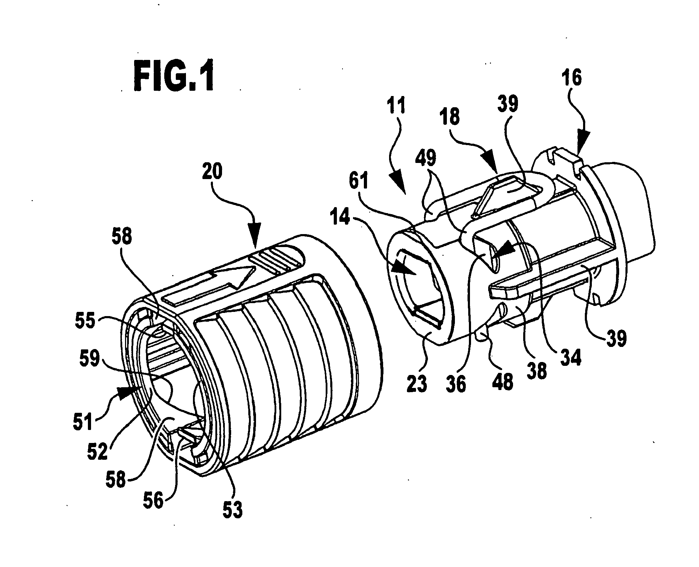

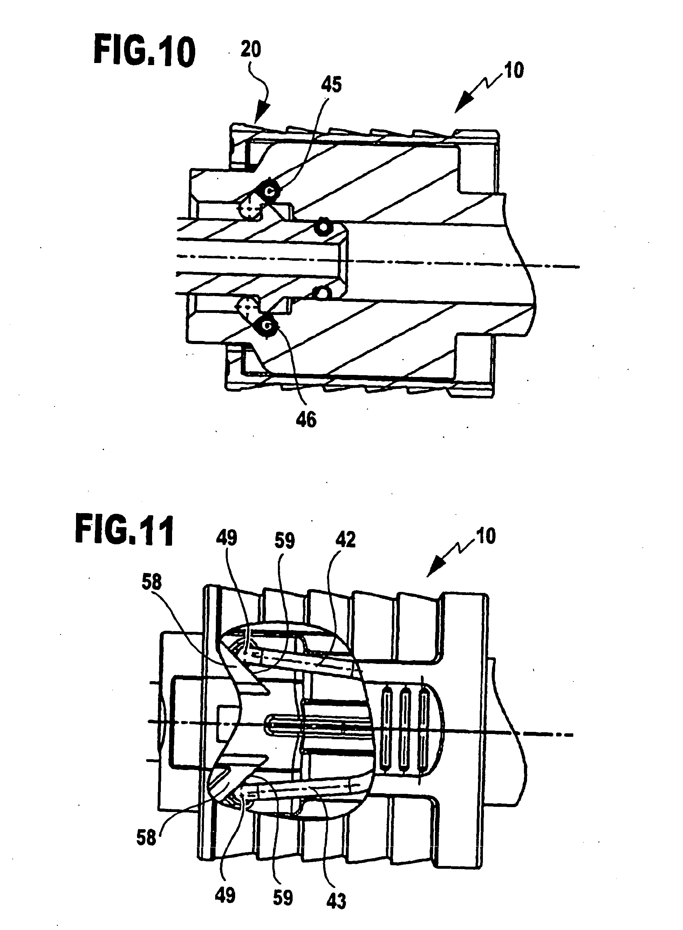

Die Verriegelungseinrichtung 16 umfasst ein U-förmiges Federelement 41 mit zwei parallel zur Längsachse des Kupplungskörpers 16 ausgerichteten Schenkeln 42, 43, die über einen kreisbogenförmigen Steg 44 miteinander verbunden sind. An die freien Enden der Schenkel 42 und 43 schließt sich jeweils ein rechtwinklig zum jeweiligen Schenkel 42 bzw. 43 ausgerichteter Verriegelungsstift 45 bzw. 46 an, der in eine Längsbohrung 33 bzw. 34 eintaucht und diese durchgreift. Dies wird aus Figur 1 deutlich. Im Bereich ihrer freien Enden stehen die Verriegelungsstifte 45, 46 jeweils mit einem ersten Endbereich 48 über die Außenseite 38 des Kupplungskörpers 16 hervor, und auch mit einem zweiten Endbereich 49, der an den jeweiligen Schenkel 42 bzw. 43 anschließt, stehen die Verriegelungsstifte 45 und 46 über die Außenseite 38 hervor. Die Verriegelungsstifte 45, 46 können jeweils an ihren beiden Endbereichen 48, 49 an der Außenseite 38 des Kupplungskörpers 16 erfasst werden, so dass die Verriegelungsstifte 45, 46 entgegen einer von dem Federelement 41 ausgeübten elastischen Rückstellkraft ausgehend von ihrer in Figur 1 dargestellten Verriegelungsstellung in eine in den Figuren 10 und 11 dargestellte Freigabestellung überführt werden können, wobei sie an den Gleitflächen 35 bzw. 36 der Längsbohrungen 33, 34 entlang gleiten. In ihrer Freigabestellung weisen die Verriegelungsstifte 45, 46 einen größeren Abstand zueinander auf als in ihrer Verriegelungsstellung.

Zum Verschieben der Verriegelungsstifte 45, 46 entlang der Gleitflächen 35, 36 kommt die Betätigungshülse 20 zum Einsatz, die stirnseitig eine nach innen zurückspringende Ringschulter 51 aufweist mit zwei einander diametral gegenüberliegenden Schulterabschnitten 52, 53, die zwischen sich jeweils einen nach innen vorspringenden Rastvorsprung 55 bzw. 56 aufnehmen. Den Rastvorsprüngen 55 und 56 unmittelbar benachbart ist an die Schulterabschnitte 52 und 53 jeweils ein Anschlagelement 58 angeformt, das der Frontseite 23 abgewandt eine schräg zur Längsachse des Kupplungskörpers 16 ausgerichtete Anschlagfläche 59 aufweist.

Die Betätigungshülse 20 kann frontseitig auf den Kupplungskörper 16 aufgesetzt werden, wobei sie mit dem Kupplungskörper 16 verrastet, der in Höhe der Frontseite 23 zwei außenseitige Vorsprünge 61 aufweist, die von den Rastvorsprüngen 55 bzw. 56 der Betätigungshülse 20 hintergriffen werden.

Wird die Betätigungshülse 20 in die der Frontseite 23 abgewandte Richtung entlang des Kupplungskörpers 16 verschoben, so legen sich die Anschlagflächen 59 jeweils an einen Endbereich 48 bzw. 49 der Verriegelungsstifte 45 und 46 an, und beim weiteren Verschieben der Betätigungshülse 20 werden die Verriegelungsstifte 45, 46 an den zugeordneten Gleitflächen 35, 36 entlang verschoben in Richtung ihrer Freigabestellung.

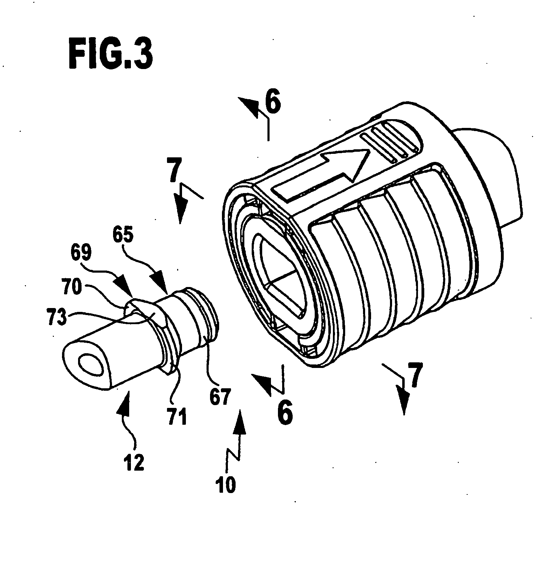

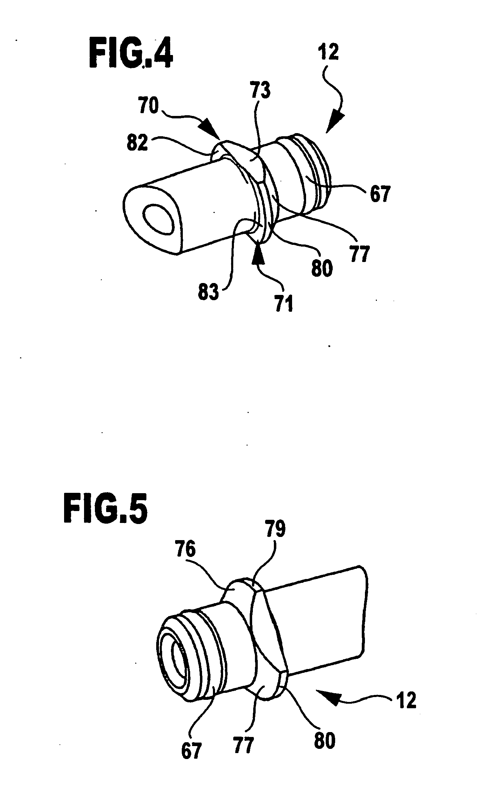

Die Ausgestaltung des erfindungsgemäßen Steckteiles 12 wird insbesondere aus den Figuren 3, 4 und 5 deutlich. Das Steckteil 12 ist in Form eines Rohrstückes ausgebildet und weist einen Dichtungsabschnitt 65 mit einer in Umfangsrichtung umlaufenden Ringnut 66 auf, in der ein Dichtring 67 angeordnet ist. An den Dichtungsabschnitt 65 schließt sich ein Verriegelungsabschnitt 69 an mit zwei einander diametral gegenüberliegenden und sich in Umfangsrichtung lediglich über einen Teilbereich des Steckteiles 12 erstreckenden Vorsprüngen in Form von Außenwülsten 70, 71, die über abgeflachte Umfangsabschnitte 73, 74 miteinander verbunden sind. Der Abstand der abgeflachten Umfangsabschnitte 73, 74 zueinander ist identisch mit dem Außendurchmesser des Dichtungsabschnittes 65. Die abgeflachten Umfangsabschnitte 73, 74 sind parallel zueinander ausgerichtet.

Die Außenwülste 70, 71 weisen jeweils eine kegelige Stirnfläche 76 bzw. 77 auf, die sich in die dem freien Ende des Steckteils abgewandte Richtung erweitert. An die kegeligen Stirnflächen 76, 77 schließt sich eine im Querschnitt kreisbogenförmige Zylindermantelfläche 79 bzw. 80 an, an die sich in axialer Richtung eine radial ausgerichtete Abschlussfläche 82 bzw. 83 anschließt. Die Abschlussflächen 82, 83 bilden jeweils eine Hinterschneidung des Steckteiles 12 aus.

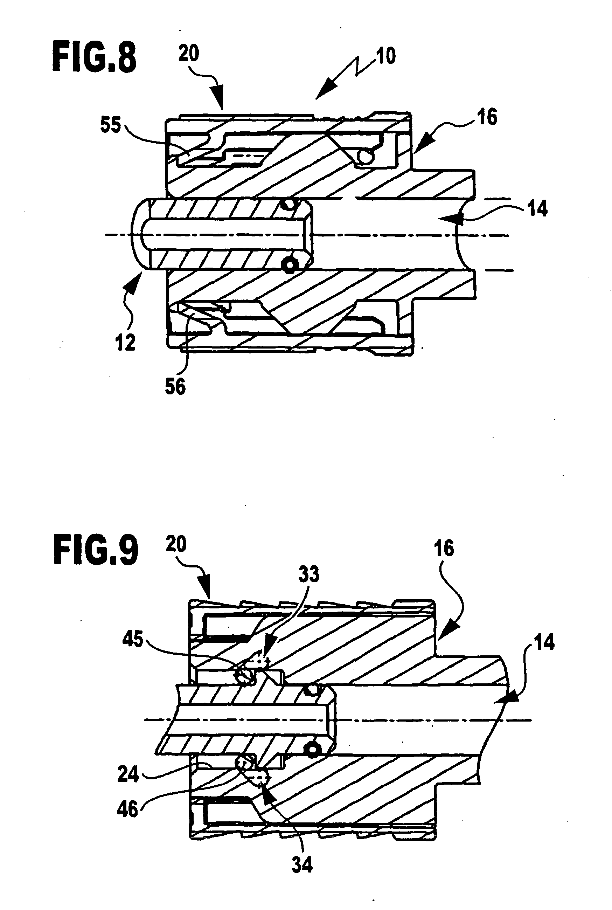

In Höhe der Außenwülste 70, 71 entspricht der Querschnitt des Steckteiles 12 den Querschnitt des Verriegelungsbereiches 24 des Kupplungskörpers 16. Zum Herstellen einer fluiddichten Verbindung kann daher das Steckteil 12 in die Aufnahme 14 des Kupplungskörpers 16 eingesetzt werden, wobei das Steckteil 12 sowohl im Bereich des Dichtungsabschnittes 65 als auch im Bereich des Verriegelungsabschnittes 69 flächig an der Wand der Aufnahme 14 anliegt. Wird das Steckteil 12 in die Aufnahme 14 eingesetzt, so treffen die kegeligen Stirnflächen 76, 77 auf die Verriegelungsstifte 45, 46, so dass diese beim weiteren Einsetzen des Steckteiles 12 in die Aufnahme 14 seitlich nach außen gedrückt werden und dadurch das Steckteil 12 zwischen den Verriegelungsstiften 45, 46 hindurch geführt werden kann. Der Dichtungsabschnitt 65 des Steckteiles 12 kann dadurch in Höhe des Dichtungsbereiches 25 des Kupplungskörpers 16 positioniert werden, wobei der Dichtring 67 fluiddicht an der Wand des Dichtungsbereiches 25 anliegt. Dies wird insbesondere aus den Figuren 8 und 9 deutlich.

Das Steckteil 12 kann so weit in die Aufnahme 14 eingesetzt werden, bis die federelastisch in ihre Verriegelungsstellung vorgespannten Verriegelungsstifte 45, 46 die von den Außenwülsten 70, 71 gebildeten Hinterschneidungen hintergreifen und dadurch das Steckteil in axialer Richtung in der Aufnahme 14 festlegen. Die Verriegelungsstifte 45, 46 bilden somit Verriegelungselemente des Kupplungsteiles 11 aus. Aufgrund der bezüglich einer Rotation um die Längsachse des Steckteiles 12 und des Kupplungskörpers 16 asymmetrischen Ausgestaltung sowohl des Verriegelungsabschnittes 69 des Steckteiles 12 als auch des Verriegelungsbereiches 24 des Kupplungskörpers 16 ist das Steckteil 12 drehfest in der Aufnahme gehalten. Dadurch wird der Dichtring 67 von Drehbewegungen, die eine Abnützung des Dichtringes zur Folge haben könnten, entlastet. Eine mechanische Abnutzung des Dichtringes 67 wird dadurch besonders gering gehalten. Außerdem ist aufgrund der bezüglich einer Rotation um die Längsachse des Steckteiles 12 und des Kupplungskörpers 16 asymmetrischen Ausgestaltung sichergestellt, dass das Steckteil 12 nur in vorgegebener Ausrichtung in die Aufnahme 14 eingesetzt werden kann. Darüber hinaus ermöglicht es die Bereitstellung der abgeflachten Umfangsabschnitte 73, 74, das Steckteil 12 materialoptimiert herzustellen. Die abgeflachten Umfangsabschnitte 73, 74 stellen außerdem sicher, dass das Steckteil 12 auch im Bereich des Verriegelungsabschnittes 69 flächig an der Wand der Aufnahme 14 angelegt werden kann.

## Patentansprüche

1. Steckteil für eine Steckverbinderanordnung, wobei das Steckteil nach Art eines Rohrstückes ausgebildet ist und einen Dichtungsabschnitt mit einem das Rohrstück in Umfangsrichtung umgebenden Dichtungselement sowie einen Verriegelungsabschnitt mit mindestens einer Hinterschneidung aufweist, und wobei das Steckteil zur Herstellung einer fluiddichten Verbindung in die Aufnahme eines Kupplungsteiles der Steckverbinderanordnung einsteckbar und im Bereich der Hinterschneidung von mindestens einem Verriegelungselement des Kupplungsteiles hintergreifbar ist, **dadurch gekennzeichnet, dass** die Hinterschneidung (82, 83) von mindestens einem außenseitig vom Rohrstück abstehenden Vorsprung (70, 71) gebildet ist, der sich in Umfangsrichtung lediglich über einen Teilbereich des Rohrstückes erstreckt.

2. Steckteil nach Anspruch 1, **dadurch gekennzeichnet, dass** sich in Umfangsrichtung an den mindestens einen Vorsprung (70, 71) ein abgeflachter Umfangsabschnitt (73, 74) des Rohrstückes anschließt.

3. Steckteil nach Anspruch 1 oder 2, **dadurch gekennzeichnet, dass** der Verriegelungsabschnitt (69) zwei einander diametral gegenüberliegende Vorsprünge (70, 71) aufweist, die über abgeflachte Umfangsabschnitte (73, 74) miteinander verbunden sind.

4. Steckteil nach einem der voranstehenden Ansprüche, **dadurch gekennzeichnet, dass** der mindestens eine Vorsprung (70, 71) nach Art eines Wulstes ausgestaltet ist.

5. Steckteil nach einem der voranstehenden Ansprüche, **dadurch gekennzeichnet, dass** der Vorsprung (70, 71) dem freien Ende des Rohrstückes zugewandt eine kegelige Stirnfläche (76, 77) aufweist.

6. Steckteil nach einem der voranstehenden Ansprüche, **dadurch gekennzeichnet, dass** der Vorsprung (70, 71) einen kreisbogenförmigen Außenrand aufweist, der von einer Zylindermantelfläche (79, 80) gebildet wird.

7. Steckteil nach einem der voranstehenden Ansprüche, **dadurch gekennzeichnet, dass** die mindestens eine Hinterschneidung (82, 83) von einer radial ausgerichteten Rückseite des Vorsprunges (70, 71) gebildet ist.

8. Steckteil nach einem der voranstehenden Ansprüche, **dadurch gekennzeichnet, dass** der Abstand der mindestens einen Hinterschneidung (82, 83) vom freien Ende des Steckteiles (12) kleiner ist als das 2-fache des Außendurchmessers des Dichtungsabschnittes (65).

9. Steckverbinderanordnung mit einem Steckteil (12) nach einem der voranstehenden Ansprüche und mit einem Kupplungsteil (11), das eine Aufnahme (14) zum Einstecken des Steckteils (12) sowie eine Verriegelungseinrichtung (18) mit mindestens einem Verriegelungselement (45, 46) umfasst, das in einer Verriegelungsstellung seitlich in einen Verriegelungsbereich der Aufnahme (14) eintaucht und mittels eines Betätigungselementes (20) in eine Freigabestellung bewegbar ist, wobei der Verriegelungsbereich (24) einen Querschnitt aufweist, der dem Querschnitt des Verriegelungsabschnittes (69) des Steckteils (12) im Bereich des mindestens einen Vorsprunges (70, 71) entspricht.

## Claims

1. Plug-in part for a plug connector arrangement, the plug-in part being in the form of a piece of tubing and comprising a sealing portion, having a sealing element enclosing the piece of tubing in a circumferential direction, and a locking portion with at least one undercut, and the plug-in part being adapted to be plugged into the receptacle of a coupling part of the plug connector arrangement in order to produce a fluid-tight connection, and it being possible for at least one locking element of the coupling part to engage behind the plug-in part in the region of the undercut, **characterized in that** the undercut (82, 83) is formed by at least one protrusion (70, 71) which projects from the outside of the piece of tubing and extends circumferentially merely over a partial region of the piece of tubing.

2. Plug-in part according to Claim 1, **characterized in that** the at least one protrusion (70, 71) is adjoined in the circumferential direction by a flattened circumferential portion (73, 74) of the piece of tubing.

3. Plug-in part according to Claim 1 or 2, **characterized in that** the locking portion (69) has two protrusions (70, 71) which are located diametrically opposite one another and are connected to one another via flattened circumferential portions (73, 74).

4. Plug-in part according to one of the preceding claims, **characterized in that** the at least one protrusion (70, 71) is configured in the manner of a bead.

5. Plug-in part according to one of the preceding claims, **characterized in that**, in the direction of the free end of the piece of tubing, the protrusion (70, 71) has a conical end face (76, 77).

6. Plug-in part according to one of the preceding claims, **characterized in that** the protrusion (70, 71) has an outer periphery in the form of a circular arc which is formed by a lateral cylindrical surface (79, 80).

7. Plug-in part according to one of the preceding claims, **characterized in that** the at least one undercut (82, 83) is formed by a radially oriented rear side of the protrusion (70, 71).

8. Plug-in part according to one of the preceding claims, **characterized in that** the spacing between the at least one undercut (82, 83) and the free end of the plug-in part (12) is less than twice the external diameter of the sealing portion (65).

9. Plug connector arrangement having a plug-in part (12) according to one of the preceding claims and having a coupling part (11) which comprises a receptacle (14), into which the plug-in part (12) can be plugged, and a locking device (18) with at least one locking element (45, 46) which, in a locking position, penetrates laterally into a locking region of the receptacle (14) and can be moved into a release position by means of an actuating element (20), the locking region (24) having a cross section which corresponds to the cross section of the locking portion (69) of the plug-in part (12) in the region of the at least one protrusion (70, 71).

## Revendications

1. Fiche pour système de connecteur enfichable, ladite fiche étant conformée en pièce tubulaire et comportant une portion d'étanchéité qui possède un élément d'étanchéité entourant la pièce tubulaire dans une direction circonférentielle, ainsi qu'une portion de verrouillage qui présente au moins une contre-dépouille, et ladite fiche pouvant être enfichée dans le logement d'une pièce de couplage dudit système de connecteur enfichable afin de réaliser une connexion étanche aux fluides et pouvant s'accrocher en arrière d'au moins un élément de verrouillage de la pièce de couplage dans la région de la contre-dépouille, **caractérisée en ce que** la contre-dépouille (82, 83) est formée par au moins une saillie (70, 71) qui dépasse de la pièce tubulaire à l'extérieur, et qui s'étend, dans une direction circonférentielle, seulement au-dessus d'une région partielle de la pièce tubulaire.

2. Fiche selon la revendication 1, **caractérisée en ce qu'**une portion périphérique aplatie (73, 74) de la pièce tubulaire se raccorde, dans une direction circonférentielle, à ladite au moins une saillie (70, 71).

3. Fiche selon la revendication 1 ou 2, **caractérisée en ce que** la portion de verrouillage (69) présente deux saillies (70, 71), qui sont diamétralement opposées l'une à l'autre, et qui sont reliées entre elles par des portions périphériques aplaties (73, 74).

4. Fiche selon l'une des revendications précédentes, **caractérisée en ce que** ladite au moins une saillie (70, 71) est conformée en bourrelet.

5. Fiche selon l'une des revendications précédentes, **caractérisée en ce que** la saillie (70, 71) présente une surface frontale conique (76, 77) qui est dirigée vers l'extrémité libre de la pièce tubulaire.

6. Fiche selon l'une des revendications précédentes, **caractérisée en ce que** la saillie (70, 71) présente un bord extérieur, en arc de cercle, qui est formé par une surface d'enveloppe cylindrique (79, 80).

7. Fiche selon l'une des revendications précédentes, **caractérisée en ce que** ladite au moins une contre-dépouille (82, 83) est formée par un côté arrière de la saillie (70, 71) qui est orienté radialement.

8. Fiche selon l'une des revendications précédentes, **caractérisée en ce que** la distance de ladite au moins une contre-dépouille (82, 83) à partir de l'extrémité libre de la fiche (12) est inférieure à deux fois le diamètre extérieur de la portion d'étanchéité (65).

9. Système de connecteur enfichable qui comporte une fiche (12) selon l'une des revendications précédentes et une pièce de couplage (11) qui possède un logement (14) destiné à l'enfichage de la fiche (12), ainsi qu'un dispositif de verrouillage (18) doté d'au moins un élément de verrouillage (45, 46) qui, dans une position de verrouillage, pénètre latéralement dans une région de verrouillage du logement (14), et peut être déplacé au moyen d'un élément d'actionnement (20) jusque dans une position de libération, la région de verrouillage (24) présentant une section qui correspond à la section de la portion de verrouillage (69) de la fiche (12) dans la région de ladite au moins une saillie (70, 71).
